# FASCICULE DE BREVET EUROPEEN

(11) **EP 1 733 533 B1**
(45) Date de publication et mention de la délivrance du brevet: **02.01.2013**
(21) Numéro de dépôt: 05717523.4
(22) Date de dépôt: 01.02.2005
(51) Int. Cl.: H04W 12/06, H04L 29/06

(54) **PROCEDE ET SYSTEME DE GESTION D'AUTORISATION D'ACCES D'UN UTILISATEUR AU NIVEAU D'UN DOMAINE ADMINISTRATIF LOCAL LORS D'UNE CONNEXION DE L'UTILISATEUR A UN RESEAU IP**
SYSTEM UND VERFAHREN ZUR BENUTZERAUTORISATIONS-ZUGANGSVERWALTUNG IN DER LOKALEN ADMINISTRATIVEN DOMÄNE WÄHREND DER VERBINDUNG EINES BENUTZERS MIT EINEM IP-NETZWERK
SYSTEM AND METHOD FOR USER AUTHORIZATION ACCESS MANAGEMENT AT THE LOCAL ADMINISTRATIVE DOMAIN DURING THE CONNECTION OF A USER TO AN IP NETWORK

(30) Priorité: 09.02.2004 EP 04290325
(43) Date de publication de la demande: 20.12.2006
(73) Titulaire: France Télécom, 75015 Paris (FR)
(72) Inventeur: CARPY, Céline, F-92350 Le Plessis Robinson (FR); MORAND, Lionel, F-92240 Malakoff (FR)
(74) Mandataire: Delumeau, François Guy
(86) Numéro de dépôt international: PCT/FR2005/000206
(87) Numéro de publication internationale: WO 2005/086454

(56) Documents cités:
- US-A1- 2003 056 096
- US-A1- 2003 093 690
- US-A1- 2003 103 506
- US-A1- 2003 236 982
- WILLENS S ET AL: "Remote Authentication Dial In User Service (RADIUS)" REQUEST FOR COMMENTS, juin 2000 (2000-06), XP015008648
- ALA-LAURILA J ET AL: "WIRELESS LAN ACCESS NETWORK ARCHITECTURE FOR MOBILE OPERATORS" IEEE COMMUNICATIONS MAGAZINE, IEEE SERVICE CENTER. PISCATAWAY, N.J, US, vol. 39, no. 11, novembre 2001 (2001-11), pages 82-89, XP001107810 ISSN: 0163-6804
- CISCO: "Double authentication" CISCO PRODUCT MANUAL, [Online] 1998, XP002283002 Extrait de l'Internet: URL:http://www.cisco.com/univercd/cc/td/do c/product/software/ios112/dbl_auth.pdf> [extrait le 2004-06-02]

## Description

La présente invention concerne la fourniture de services basés sur un transport IP (Internet Protocol) tels que la connexion au réseau Internet ou la téléphonie sur IP.

Elle s'applique notamment aux architectures basées sur le protocole RADIUS (Remote Authentication Dial In User Service) qui sont largement déployées dans les réseaux IP pour gérer les droits d'accès des utilisateurs et le comptage nécessaire à la facturation de ces derniers pour un domaine administratif donné. Dans ce contexte, un domaine administratif regroupe l'ensemble des équipements réseau gérés par un même administrateur réseau. Ces architectures sont également utilisées pour gérer l'accès aux réseaux des utilisateurs en situation d'itinérance (roaming), c'est-à-dire connectés depuis un réseau appartenant à un domaine administratif différent de celui dont ils dépendent, la gestion de l'autorisation étant alors effectuée entre domaines administratifs.

Dans le cadre des architectures permettant l'accès à des services IP par l'intermédiaire de technologies telles que ADSL (Asymmetric Digital Subscriber Line), WLAN (Wireless Local Area Network), et WAP (Wireless Application Protocol), au moins deux domaines administratifs participent à la gestion d'autorisation d'accès. Il s'agit du domaine administratif local, c'est-à-dire celui auquel l'utilisateur se connecte et d'un domaine administratif distant, c'est-à-dire celui du fournisseur d'accès au réseau IP ou de services auquel il désire accéder. Dans ces architectures, le domaine administratif local joue essentiellement le rôle d'intermédiaire entre l'utilisateur et le domaine administratif de son fournisseur de service.

Le protocole RADIUS qui est conçu essentiellement sur le modèle client/serveur, permet de gérer les droits d'accès d'un utilisateur d'un réseau IP. Dans les architectures mentionnées ci-avant, l'utilisateur se connecte tout d'abord à un serveur d'accès d'un réseau local, ce serveur possédant un client RADIUS chargé de récupérer les informations fournies lors de sa demande d'accès et de transmettre ces informations dans un message de type requête d'accès (Access-Request) à un serveur d'authentification du réseau d'accès, possédant un serveur RADIUS. Le serveur d'authentification assure le traitement des requêtes d'accès en authentifiant les utilisateurs en fonction des informations dont il dispose, et fournit en réponse, soit une autorisation d'accès sous la forme d'un message d'acceptation d'accès (Access-Accept), soit un refus d'accès sous la forme d'un message de refus d'accès (Access-Reject) contenant la raison du refus. Le message d'autorisation d'accès contient toutes les informations nécessaires au serveur d'accès pour fournir le service final à l'utilisateur et notamment les informations sur la configuration d'accès.

En plus des messages mentionnés ci-avant, le protocole RADIUS prévoit également un message de défi d'accès (Access-Challenge) permettant au serveur d'authentification d'envoyer au serveur d'accès une valeur de défi non-prédictible. A la réception d'un tel message, le serveur d'accès demande à l'utilisateur de lui fournir une valeur de réponse obtenue en appliquant à la valeur de défi un algorithme prédéfini. Sur réception de cette réponse, le serveur d'accès émet à destination du serveur d'authentification un nouveau message de requête d'accès contenant la valeur de réponse. Ce nouveau message de requête d'accès est traité par le serveur d'authentification qui y répond en envoyant un message d'acceptation ou de refus d'accès, selon la valeur de réponse fournie par l'utilisateur. Le serveur d'authentification peut également répondre par un message de défi d'accès (Access Challenge)

Si le serveur d'authentification du réseau d'accès, appelé par le serveur d'accès ne dispose pas des informations nécessaires au traitement de la demande d'accès émise par l'utilisateur, il peut s'adresser à un serveur d'authentification approprié en se comportant comme un serveur mandataire (proxy) RADIUS qui ne fait que retransmettre les messages entre le serveur d'accès et un autre serveur d'authentification. Il peut ainsi assurer le rôle d'aiguillage des messages RADIUS qui transitent par lui vers plusieurs serveurs d'authentification. Il peut également assurer la fonction de filtrage de ces messages et en modifier le contenu (par ajout, suppression ou modification des attributs) sans pour autant pouvoir en modifier la nature.

Le rôle d'un serveur proxy RADIUS tel que prévu dans le protocole RADIUS est donc très limité. Or un tel serveur peut avoir besoin d'exercer un contrôle renforcé sur la signalisation et éventuellement déclencher une authentification locale. En particulier, un tel serveur mandataire n'a pas la possibilité d'initier sur réception d'un message de requête d'accès un échange de type défi/réponse avec un client RADIUS, et ce indépendamment d'un serveur d'authentification distant.

Dans de nombreuses applications, il est pourtant souhaitable de pouvoir authentifier un utilisateur non seulement au niveau distant, mais également au niveau local, notamment pour pouvoir proposer aux utilisateurs des services supplémentaires au niveau local, en plus d'un accès à un réseau public tel que le réseau Internet.

La présente invention a pour but de supprimer ces inconvénients. Cet objectif est atteint par la prévision d'un procédé de gestion d'autorisation d'un utilisateur lors d'une tentative d'accès à un réseau de transport IP par l'intermédiaire d'un réseau d'accès, ce procédé comprenant des étapes au cours desquelles :
- un terminal d'utilisateur émet à destination d'un fournisseur d'accès ou de service IP une requête d'accès contenant des données d'authentification de l'utilisateur auprès du fournisseur d'accès ou de service IP, qui est transmise par l'intermédiaire d'un serveur d'accès du réseau d'accès et du réseau de transport IP, en vue d'être adressée à un serveur d'authentification distant du fournisseur d'accès ou de service IP,
- sur réception de la requête d'accès, le serveur d'accès émet une requête RADIUS conforme au protocole RADIUS à un serveur proxy du réseau d'accès,
- sur réception de la requête RADIUS, le serveur proxy émet une demande d'autorisation d'accès au serveur d'authentification distant,
- le serveur d'authentification distant exécute une procédure d'authentification de l'utilisateur, sur la base des données d'authentification contenues dans la requête d'accès, et transmet en réponse au serveur proxy un message de réponse contenant le résultat de la procédure d'authentification de l'utilisateur.

Selon l'invention, ce procédé comprend en outre des étapes au cours desquelles :
- le serveur proxy détermine pour chaque requête RADIUS, reçue du serveur d'accès et correspondant à une requête d'accès émise par un terminal d'utilisateur, si une authentification locale de l'utilisateur émetteur de la requête d'accès, au niveau du réseau local doit être effectuée,
- si une authentification locale de l'utilisateur doit être effectuée, le serveur proxy émet à destination du serveur d'accès une demande de données d'authentification qui est retransmise au terminal de l'utilisateur, reçoit un message de réponse du terminal d'utilisateur par l'intermédiaire du serveur d'accès, et exécute une procédure d'authentification locale de l'utilisateur, sur la base des données d'authentification contenues dans le message de réponse.

Selon un mode de réalisation préféré de l'invention, la demande de données d'authentification émise par le serveur proxy à destination du terminal de l'utilisateur si une authentification locale de l'utilisateur doit être effectuée, est un message de défi contenant un nombre aléatoire.

Avantageusement, le message de défi contient une indication permettant au terminal de l'utilisateur de déterminer qu'il concerne une authentification locale de l'utilisateur.

Selon un mode de réalisation préféré de l'invention, l'authentification distante de l'utilisateur par le serveur d'authentification distant comprend des étapes au cours desquelles :
- le serveur d'authentification distant émet en direction de l'utilisateur un message de défi contenant un nombre aléatoire,
- le serveur proxy retransmet le message de défi émis par le serveur d'authentification distant en direction de l'utilisateur et reçoit dans un message de réponse les données d'authentification de l'utilisateur auprès du serveur d'authentification distant,
- le serveur proxy retransmet au serveur d'authentification distant le message de réponse émis par le terminal de l'utilisateur,
- le serveur proxy reçoit du serveur d'authentification distant un message de résultat de l'authentification de l'utilisateur.

Selon un mode de réalisation préféré de l'invention, le serveur proxy détermine quels droits d'accès attribuer à l'utilisateur en fonction du résultat des authentifications locale et distante de l'utilisateur.

L'invention concerne également un système de gestion d'autorisation d'un utilisateur lors d'une tentative d'accès d'un terminal d'utilisateur à un fournisseur d'accès ou de service IP par l'intermédiaire d'un réseau de transport IP, le système comprenant :
- des réseaux d'accès auxquels sont connectés les terminaux d'utilisateurs,
- des passerelles IP assurant la liaison respectivement entre les réseaux d'accès et le réseau de transport IP,
- au moins un serveur d'accès par réseau d'accès, conçu pour émettre à la demande des terminaux d'utilisateur des requêtes d'accès RADIUS conformes au protocole RADIUS,
- au moins un serveur d'authentification distant pour chacun des fournisseurs d'accès ou de service IP, conçu pour authentifier les utilisateurs en fonction de données d'authentification contenues dans des requêtes d'accès reçues par le serveur d'authentification, et
- un serveur proxy connecté au réseau de transport IP conçu pour retransmettre chaque requête d'accès RADIUS, émise par l'un des serveurs d'accès à la demande d'un utilisateur, vers un serveur d'authentification distant de fournisseur d'accès ou de service IP indiqué dans la requête d'accès, et retransmettre vers les serveurs d'accès les réponses d'authentification fournies par les serveurs d'authentification distant.

Selon l'invention, le serveur proxy comprend :
- des moyens pour déterminer pour chaque requête d'accès RADIUS reçue d'un serveur d'accès à la demande d'un utilisateur, si une authentification locale de l'utilisateur émetteur de la requête d'accès doit ou non être effectuée au niveau du réseau local,
- des moyens pour émettre par l'intermédiaire d'un serveur d'accès à destination d'un terminal d'utilisateur devant être authentifié localement, un message de demande de données d'authentification, et pour recevoir en réponse du terminal d'utilisateur un message de réponse contenant les données d'authentification demandées, et
- des moyens pour exécuter une procédure d'authentification locale de l'utilisateur, sur la base des informations d'authentification contenues dans le message de réponse.

Selon un mode de réalisation préféré de l'invention, le serveur proxy comprend en outre des moyens pour déterminer un résultat global d'authentification en fonction du résultat de l'authentification locale de l'utilisateur et de la réponse d'authentification de l'utilisateur fournie par le serveur d'authentification, et pour retransmettre le résultat global d'authentification vers le serveur d'accès.

Selon un mode de réalisation préféré de l'invention, chaque serveur d'accès comprend un client RADIUS et le serveur proxy comprend un client et un serveur RADIUS, pour échanger des messages conformes au protocole RADIUS.

Selon un mode de réalisation préféré de l'invention, le message de demande de données d'authentification émis par le serveur proxy pour authentifier localement l'utilisateur est un message de défi, le serveur proxy comportant des moyens pour générer un nombre aléatoire qui est inséré dans le message de défi, et des moyens pour vérifier la réponse au message de défi reçue du terminal de l'utilisateur.

Selon un mode de réalisation préféré de l'invention, le serveur proxy comprend des moyens pour déterminer quels droits d'accès attribuer à l'utilisateur en fonction du résultat des authentifications locale et distante de l'utilisateur.

L'invention concerne en outre un serveur proxy pour autoriser un terminal d'utilisateur connecté à un réseau d'accès à accéder à un fournisseur d'accès ou de service IP par l'intermédiaire d'un réseau de transport IP relié au réseau d'accès par une passerelle IP, le serveur proxy étant connecté à un réseau de transport IP et comprenant des moyens pour :
- retransmettre chaque requête d'accès RADIUS conforme au protocole RADIUS, émise par un serveur d'accès à la demande d'un terminal d'utilisateur, vers un serveur d'authentification distant de fournisseur d'accès ou de service IP indiqué dans la requête d'accès, et
- retransmettre vers le serveur d'accès la réponse d'authentification fournie par le serveur d'authentification distant.

Selon l'invention, le serveur proxy comprend en outre des moyens pour :
- déterminer pour chaque requête d'accès RADIUS reçue d'un serveur d'accès à la demande d'un utilisateur, si une authentification locale de l'utilisateur émetteur de la requête d'accès doit ou non être effectuée au niveau du réseau local,
- émettre par l'intermédiaire d'un serveur d'accès à destination d'un terminal d'utilisateur devant être authentifié localement, un message de demande de données d'authentification, et pour recevoir en réponse du terminal d'utilisateur un message de réponse contenant les données d'authentification demandées, et
- exécuter une procédure d'authentification locale de l'utilisateur, sur la base des informations d'authentification contenues dans le message de réponse.

L'invention concerne également un programme d'ordinateur destiné à être exécuté par un serveur proxy conçu pour autoriser un terminal d'utilisateur connecté à un réseau d'accès à accéder à un fournisseur d'accès ou de service IP par l'intermédiaire d'un réseau de transport IP relié au réseau d'accès par une passerelle IP, le serveur proxy étant connecté à un réseau de transport IP, le programme comprenant des instructions pour :
- retransmettre chaque requête d'accès RADIUS conforme au protocole RADIUS, émise par un serveur d'accès à la demande d'un terminal d'utilisateur, vers un serveur d'authentification distant de fournisseur d'accès ou de service IP indiqué dans la requête d'accès, et
- retransmettre vers le serveur d'accès la réponse d'authentification fournie par le serveur d'authentification distant.

Selon l'invention, le programme comprend en outre des instructions pour :
- déterminer pour chaque requête d'accès RADIUS reçue d'un serveur d'accès à la demande d'un utilisateur, si une authentification locale de l'utilisateur émetteur de la requête d'accès doit ou non être effectuée au niveau du réseau local,
- émettre par l'intermédiaire d'un serveur d'accès à destination d'un terminal d'utilisateur devant être authentifié localement, un message de demande de données d'authentification, et recevoir en réponse du terminal d'utilisateur un message de réponse contenant les données d'authentification demandées, et
- exécuter une procédure d'authentification locale de l'utilisateur, sur la base des informations d'authentification contenues dans le message de réponse.

Un mode de réalisation préféré de l'invention sera décrit ci-après, à titre d'exemple non limitatif, avec référence aux dessins annexés dans lesquels :
La figure 1 représente schématiquement l'architecture d'un système de fourniture de services basés sur un transport IP, selon l'invention ;
Les figures 2a et 2b représentent un diagramme de séquencement d'étapes qui sont exécutées dans le système représenté sur la figure 1, conformément au procédé selon l'invention.

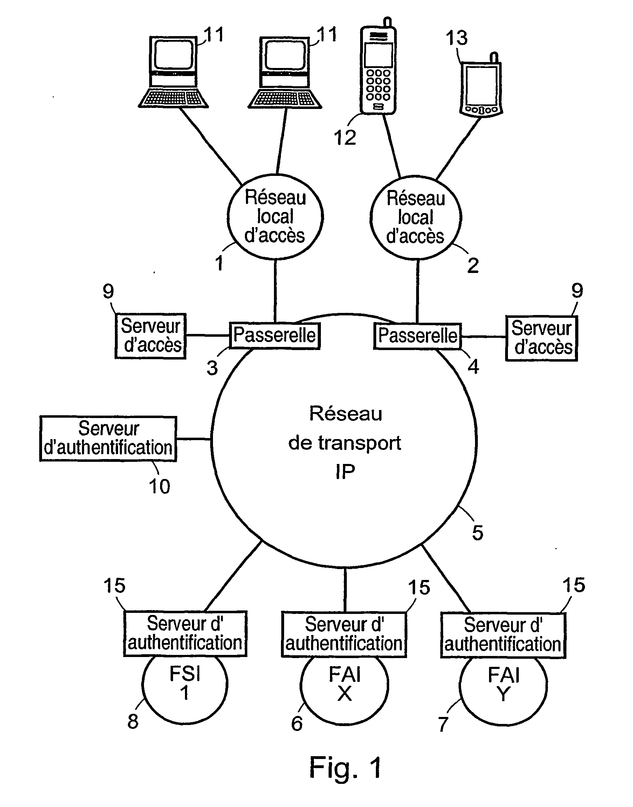

Le système représenté sur la figure 1 comprend des réseaux d'accès 1, 2 auxquels sont connectés des terminaux 11, 12, 13 d'utilisateurs. Ces réseaux d'accès 1, 2 fournissent aux terminaux un accès à un réseau de transport IP 5 par l'intermédiaire de passerelles IP 3, 4, respectives adaptées au réseau d'accès. Le réseau de transport IP 5 permet aux utilisateurs d'accéder à un fournisseur d'accès Internet 6, 7 ou à un fournisseur de services IP 8.

Selon l'invention, ce système comprend en outre des serveurs d'accès 9 connectés respectivement aux réseaux locaux 1, 2, auxquels les utilisateurs souhaitant accéder au réseau IP doivent se connecter, et un serveur proxy d'authentification 10 connecté au réseau de transport IP 5 et auquel chaque serveur d'accès 9 transmet les requêtes d'accès émises par les terminaux 11, 12, 13.

Chaque serveur d'accès 9 est conçu pour recevoir toutes les requêtes d'accès à un fournisseur 6, 7, 8 d'accès ou de service, émises par les utilisateurs sur le réseau local 1, 2 correspondant, et d'aiguiller ces requêtes par l'intermédiaire d'une passerelle 3, 4 au travers du réseau de transport IP vers le fournisseur 6, 7, 8 d'accès ou de service indiqué dans la requête par le terminal de l'utilisateur, chaque fournisseur d'accès ou de service disposant d'un serveur d'authentification 15.

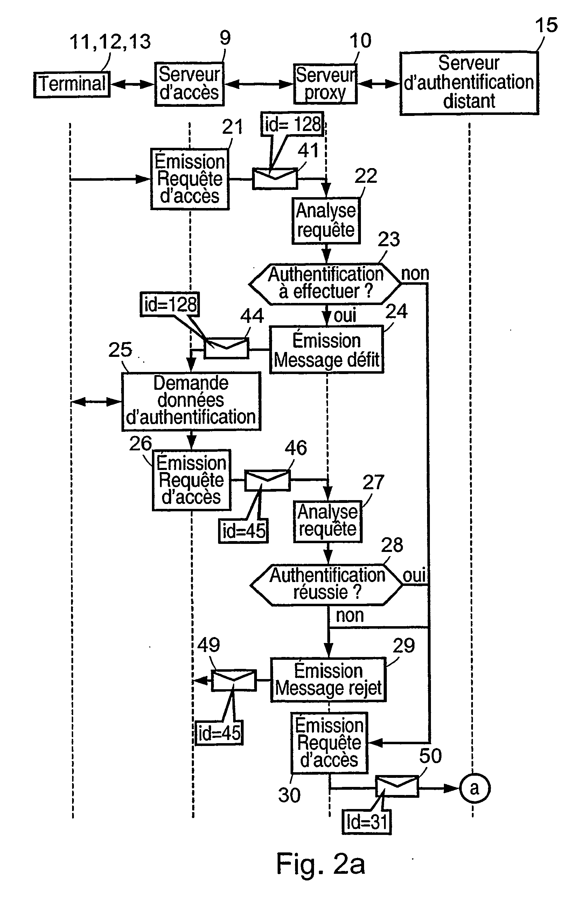

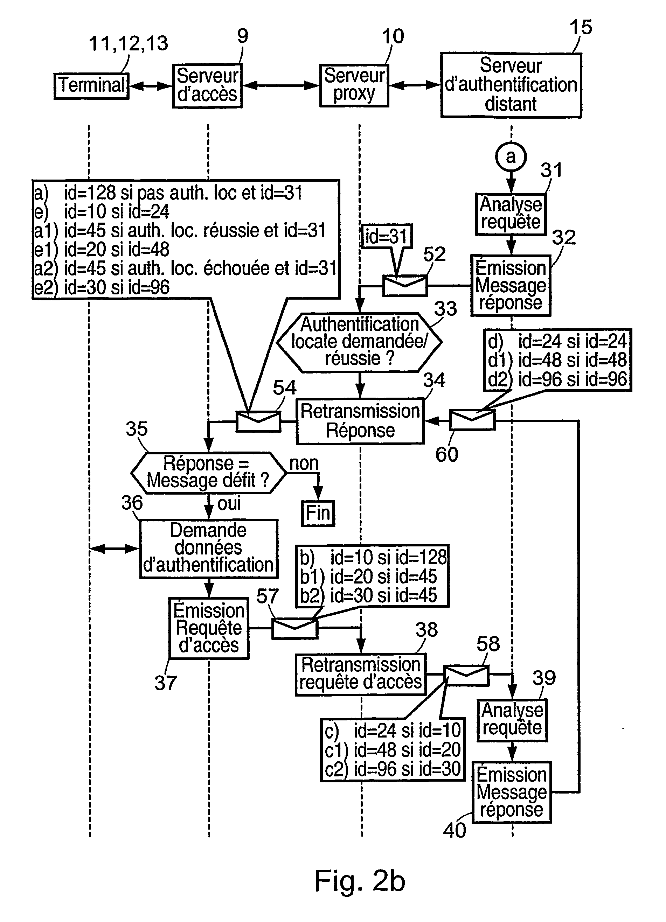

Lorsqu'un terminal d'utilisateur 11, 12, 13 tente d'accéder au réseau local, le logiciel de navigation Internet est par exemple automatiquement redirigé vers un serveur Web jouant le rôle de serveur d'accès 9 qui exécute la procédure d'authentification d'accès illustrée sur les figures 2a et 2b.

Cette procédure est conforme au protocole RADIUS. Ainsi, le serveur d'accès 9 intègre un client RADIUS pour pouvoir recevoir des messages RADIUS et y répondre. Le serveur proxy 10 possède également toutes les fonctionnalités d'un proxy tel que décrit dans la norme RADIUS.

Dans toute la description qui suit de la procédure d'authentification, les identifiants de messages ou requêtes RADIUS employés sont donnés à titre d'exemple. Dans la norme RADIUS le terme "type" détermine la nature du message.

A la première étape 21, le serveur d'accès 9 émet à destination du serveur proxy d'authentification 10 situé dans le domaine administratif local, une requête d'accès 41 du type RADIUS Access-Request comportant un identifiant égal à 128. A la réception d'un tel message à l'étape 22, le serveur proxy 10 mémorise et analyse le contenu de ce message pour déterminer si l'utilisateur doit être authentifié localement (étape 23).
Ainsi, une authentification locale peut par exemple être déclenchée si la requête d'accès provient d'un réseau local particulier, ou en fonction d'informations d'identification de l'utilisateur contenues dans la requête.

Si l'utilisateur doit être authentifié localement, le serveur proxy 10 émet à destination du serveur d'accès 9 à l'étape 24 un message de défi 44 du type RADIUS Access-Challenge comportant un identifiant égal à 128. Ce message contient également une valeur non prédictible par exemple générée aléatoirement par le serveur proxy 10 ou par un équipement distinct qui peut être un centre d'authentification, et un attribut précisant l'origine du message, à savoir le domaine administratif local. A cet effet, on peut utiliser les attributs de type "Vendor-Specific", ou les attributs "State" ou "Reply-Message" prévus par le protocole RADIUS.

A l'étape suivante 25, le serveur d'accès 9 reçoit le message de défi 44, identifie l'émetteur du message à l'aide de l'attribut précisant l'origine du message, et donc demande à l'utilisateur de lui fournir une réponse à la demande d'authentification locale. Cette réponse peut contenir une valeur de réponse obtenue en appliquant à la valeur aléatoire contenue dans le message de défi un algorithme de cryptage prédéfini faisant intervenir une clé secrète propre à l'utilisateur, le serveur proxy disposant de moyens pour déterminer si la valeur de réponse correspond à la valeur aléatoire et à la clé secrète de l'utilisateur.

A l'étape suivante 26, le serveur d'accès transmet au serveur proxy 10 une nouvelle requête d'accès 46 contenant la réponse à la demande d'authentification locale, du type RADIUS Access-Request contenant un identifiant égal à 45.

A l'étape suivante 27, le serveur proxy 10 reçoit du serveur d'accès la réponse à l'authentification locale, fournie par l'utilisateur, la vérifie et la mémorise. Si à l'étape suivante 28, la réponse est invalide (l'authentification locale a échoué), le serveur proxy peut refaire une tentative d'authentification en reprenant la procédure à l'étape 24. Si l'authentification locale de l'utilisateur n'a pas réussi à l'issue d'un nombre prédéfini de tentatives, le serveur proxy 10 peut selon la politique d'administration locale, envoyer à l'utilisateur par l'intermédiaire du serveur d'accès 9 un message de rejet du type RADIUS Access-Reject, ou poursuivre la procédure à l'étape 30 pour permettre à l'utilisateur d'être authentifié par un serveur d'authentification distant 15 mis en oeuvre par un fournisseur d'accès ou de services auquel l'utilisateur veut accéder.

Si à l'étape 23 l'utilisateur ne doit pas être authentifié localement, la procédure se poursuit également à l'étape 30. A cette étape, le serveur proxy 10 émet à destination d'un serveur d'authentification distant 15 auprès duquel l'utilisateur souhaite être authentifié, une requête d'accès 50, du type RADIUS Access-Request contenant un identifiant égal à 31, si le serveur 15 est de type RADIUS. Ce message est constitué à partir des informations contenues dans la requête d'accès 41 mémorisée par le serveur proxy 10 à l'étape 22.

A l'étape suivante 31, le serveur d'authentification distant 15 reçoit et analyse ce message pour déterminer le droit d'accès au service demandé par l'utilisateur. A l'étape suivante 32, le serveur d'authentification émet un message de réponse 52 qui peut être un message d'acceptation, de rejet ou de défi, selon les informations d'authentification contenues dans le message 50 reçu. Ainsi, conformément au protocole RADIUS, le message 52 peut être de type Access-Accept, Access-Reject ou Access-Challenge et contient un identifiant égal à 31 correspondant à l'identifiant du message 50 reçu.

Les étapes suivantes de la procédure dépendent de deux conditions (étape 33), à savoir si l'authentification locale de l'utilisateur a été demandée au préalable ou non, et si l'authentification locale a été demandée, si celle-ci a réussi ou échoué.

Si l'authentification n'a pas été demandée au préalable, le serveur proxy 10 qui reçoit le message 52, traite ce message à l'étape 34 et envoie un message 54 au serveur d'accès 9. Ce message 54 correspond à une réponse au message 41 émis à l'étape 21 par le serveur d'accès. Ces messages comportent par exemple l'identifiant 128 (cas a) dans la figure 2b). Ainsi, si le message 52 émis par le serveur d'authentification distant 15 est un message d'acceptation (RADIUS Access-Accept), le serveur proxy 10 renvoie au serveur d'accès 9 un message d'acceptation (RADIUS Access-Accept). Si le message 52 émis par le serveur d'authentification distant 15 est un message de refus (RADIUS Access-Reject), le serveur proxy 10 renvoie au serveur d'accès 9 un message de refus (RADIUS Access-Reject) ou un message d'acceptation selon la politique locale du serveur proxy. Le message 52 peut également être un message de défi si l'authentification de l'utilisateur par le serveur d'authentification distant 15 a échoué, ou si ce dernier a besoin de davantage d'informations d'authentification ou souhaite appliquer un mécanisme dynamique d'authentification. Dans ce cas, le message 54 transmis au serveur d'accès est un message de défi (RADIUS Access-Challenge).

A la réception du message 54 à l'étape 35, le serveur d'accès analyse le contenu du message, et s'il s'agit d'un message d'acceptation ou de refus, la procédure d'authentification prend fin et le serveur d'accès configure l'accès de l'utilisateur au réseau local 1, 2, et au réseau IP 5 en fonction de la réponse du serveur proxy 10. Si le message 54 est un message de défi, le serveur d'accès demande à l'utilisateur à l'étape 36 de fournir une réponse à la demande d'authentification du domaine administratif distant. A l'étape suivante 37, le serveur d'accès constitue une requête d'accès 57 contenant la réponse de l'utilisateur et l'envoie au serveur proxy 10. Cette requête d'accès est un message RADIUS Access-Request avec un identifiant égal à 10 (cas b) dans la figure 2b).

A l'étape suivante 38, le serveur proxy reçoit le message 57 et le retransmet au serveur d'authentification distant 15 dans un message de requête 58, sous la forme d'un message RADIUS du type Access-Request avec un identifiant égal à 24 (cas c) dans la figure 2b). A l'étape suivante 39, le serveur 15 reçoit et analyse le contenu du message 58 et émet à l'étape 40 suivante un message de réponse 60 dont le contenu dépend de la réussite de l'authentification effectuée par le serveur 15. Ce message conserve l'identifiant 24 (cas d) dans la figure 2b). Ainsi, le message 60 peut être un message d'acception (RADIUS Access-Accept), de refus (RADIUS Access-Reject) ou un nouveau message de défi (RADIUS Access-Challenge)

La procédure d'authentification reprend ensuite à partir de l'étape 34 au cours de laquelle le serveur proxy 10 traite et retransmet le message 60 reçu au serveur d'accès sous la forme d'un message 54. L'identifiant du message 60 reçu, égal à 24, est remplacé par 10 pour correspondre à celui 57 émis par le serveur d'accès 9 (cas e) dans la figure 2b).

La procédure d'authentification se termine à l'étape 35 si le message 54 qui est transmis au serveur d'accès 9 est un message d'acceptation ou de refus et contient le résultat de l'authentification effectuée par le serveur d'authentification distant 15 (pas d'authentification locale). Si par contre le message 54 est un nouveau message de défi, la procédure se poursuit à l'étape 36.

Si à l'étape 33, l'authentification locale a été demandée et a réussi, la procédure comprenant les étapes 34 à 40 est également exécutée, mais avec des messages contenant des numéros d'identification différents (messages correspondants aux cas a1) à e1) dans la figure 2b). Ainsi, le message 52 contenant l'identifiant 31 est transformé à l'étape 34 par le serveur proxy en un message 54 contenant l'identifiant 45 et le résultat de l'identification locale. A l'étape 37, l'identifiant 45 du message 57 devient 20. A l'étape suivante 38, l'identifiant 20 du message 58 devient 48. A l'étape 40, l'identifiant 48 reste inchangé. A l'étape suivante 34, l'identifiant 48 du message devient 20.

La procédure d'authentification se termine à l'étape 35 si le message 54 qui est transmis au serveur d'accès 9 est du type acceptation ou refus, contenant un attribut précisant le résultat des authentifications locale (réussite) et distante. Si par contre le message 54 est un nouveau message de défi, la procédure se poursuit à l'étape 36.

A l'issue de la procédure d'authentification, si l'authentification distante a réussi, le message 54 est de type acceptation, et si elle a échoué, ce message peut être de type acceptation ou refus selon la politique d'administration locale.

Si à l'étape 33, l'authentification locale a été demandée et a échoué, la procédure comportant les étapes 34 à 40 est également exécutée, avec des messages contenant des numéros d'identification différents (messages correspondants aux cas a2) à e2) dans la figure 2b). Ainsi, le message 52 contenant l'identifiant 31 est transformé à l'étape 34 par le serveur proxy en un message 54 contenant l'identifiant 45 et le résultat de l'identification locale. A l'étape 37, l'identifiant 45 du message 57 devient 30. A l'étape suivante 38, l'identifiant 30 du message 58 devient 96. A l'étape 40, l'identifiant 96 reste inchangé. A l'étape suivante 34, l'identifiant 96 du message devient 30.

La procédure d'authentification se termine à l'étape 35 si le message 54 qui est transmis au serveur d'accès 9 est du type acceptation ou refus, contenant un attribut précisant le résultat des authentifications locale (échec) et distante. Si par contre le message 54 est un nouveau message de défi, la procédure se poursuit à l'étape 36.

A l'issue de la procédure d'authentification, le message 54 qui est envoyé au serveur d'accès 9 peut être de type acceptation (même si les authentifications locale et distante ont échoué) ou refus selon la politique d'administration locale.

En fonction du résultat de la procédure d'authentification, le serveur d'accès 9 configure ensuite l'accès de l'utilisateur d'une manière adéquate et peut l'informer sur le type de connexion à laquelle il a droit.

Grâce à ces dispositions, les procédures locale et distante d'authentification d'un utilisateur sont totalement indépendantes. Chaque domaine administratif est donc totalement libre d'imposer ou non une procédure d'authentification.

Dans un mode de réalisation de l'invention, on utilise deux attributs du type "Vendor Specific" des messages RADIUS prévus dans le protocole. Le premier de ces deux attributs appelé "Local_Challenge" est inclus dans les messages de défi envoyés par le serveur proxy 10 au serveur d'accès 9. Cet attribut est utilisé pour indiquer au serveur d'accès si oui ou non il est à l'origine du message. En fonction de la présence ou non de cet attribut, le serveur d'accès précise à l'utilisateur s'il s'agit d'une authentification locale ou distante pour obtenir une réponse adéquate à un message de défi.
Le second attribut appelé "Auth_Status" est inclus dans les messages d'acceptation envoyés par le serveur proxy pour clôturer la procédure d'authentification de l'utilisateur et pour indiquer au serveur d'accès les résultats d'authentification locale et distante.

Cette procédure est parfaitement adaptée à un accès au réseau Internet par l'intermédiaire d'un réseau local ouvert de type WLAN, par exemple Wi-Fi, dont l'accès est contrôlé par son propriétaire. Ce réseau local peut proposer des services locaux, tels que des services de fourniture d'informations sur le lieu où le réseau local est accessible, par exemple des plans, des listes d'adresses utiles, etc. Pour accéder au réseau Internet, les utilisateurs qui se connectent à ce réseau local doivent en outre procéder à une demande d'accès auprès de leur fournisseur d'accès.

Lorsqu'un utilisateur muni d'un terminal se trouve dans la zone de couverture du réseau local WLAN, et qu'il lance le logiciel de navigation, celui-ci est automatiquement redirigé sur un serveur Web du serveur d'accès local 9. Dans une page d'accueil du serveur Web, les utilisateurs sont invités à introduire un identifiant et un mot de passe d'accès au réseau local s'ils en ont un. S'ils souhaitent accéder au réseau Internet, ils doivent sélectionner un fournisseur d'accès dans une liste, puis introduire un identifiant et un mot de passe d'accès correspondant au fournisseur d'accès sélectionné.
Les informations saisies par l'utilisateur sont transmises par le serveur d'accès 9 au serveur proxy 10 du réseau local.

Si l'utilisateur a introduit un identifiant et un mot de passe d'accès au réseau local, le serveur proxy 10 du réseau local déclenche la procédure d'identification locale et garde en mémoire le résultat de cette authentification. Puis il déclenche la procédure d'authentification de l'utilisateur auprès du serveur d'authentification 15 du fournisseur d'accès sélectionné par l'utilisateur.

Selon le résultat des authentifications locale et distante, le serveur proxy envoie un message d'acceptation, ou de refus si les authentifications locale et distante ont toutes les deux échoué. Dans ce dernier cas, le serveur d'accès n'autorise pas l'utilisateur à accéder à des services locaux ou distants.
Si l'utilisateur a été authentifié uniquement localement ou uniquement auprès du fournisseur d'accès, le serveur d'accès ne lui donne accès qu'aux services correspondants. Et si les deux authentifications ont réussi, le serveur d'accès donne accès à l'utilisateur à la fois aux services locaux et distants.

De même, si l'utilisateur n'a pas demandé une authentification locale, seule une authentification distante est effectuée, et si celle-ci réussit, le serveur d'accès lui configure un accès au réseau Internet.

La qualité de service QoS attribuée à l'utilisateur dans le réseau local peut également être adaptée par le serveur d'accès 9 en fonction du résultat de l'authentification locale.

## Revendications

1. Procédé de gestion d'autorisation d'accès d'un terminal utilisateur lors d'une tentative d'accès à un réseau de transport IP (5) par l'intermédiaire d'un réseau local d'accès (1, 2), ce procédé comprenant des étapes au cours desquelles :
- un terminal (11, 12, 13) d'utilisateur émet à destination d'un fournisseur d'accès ou de service IP (6, 7, 8) une requête d'accès contenant des données d'authentification de l'utilisateur auprès du fournisseur d'accès ou de service IP, qui est transmise par l'intermédiaire d'un serveur d'accès (9) du réseau local d'accès (1, 2), via une passerelle (3, 4) assurant la liaison entre ledit réseau local d'accès (1, 2) et le réseau de transport IP (5), en vue d'être adressée à un serveur d'authentification distant (15) du fournisseur d'accès ou de service IP,
- sur réception de la requête d'accès, le serveur d'accès (9) émet une requête RADIUS conforme au protocole RADIUS à un serveur proxy (10) duréseau local d'accès (1, 2),
- sur réception de la requête RADIUS, le serveur proxy émet une demande d'autorisation d'accès au serveur d'authentification distant (15),
- le serveur d'authentification distant (15) exécute une procédure d'authentification de l'utilisateur, sur la base des données d'authentification contenues dans la requête d'accès, et transmet en réponse au serveur proxy un message de réponse contenant le résultat de la procédure d'authentification de l'utilisateur,
**caractérisé en ce qu'**il comprend en outre des étapes au cours desquelles :
- le serveur proxy détermine pour chaque requête RADIUS, reçue du serveur d'accès (9) et correspondant à une requête d'accès émise par un terminal d'utilisateur, si une authentification locale de l'utilisateur émetteur de la requête d'accès, au niveau du réseau local d'accès (1, 2) doit être effectuée,
- si une authentification locale de l'utilisateur doit être effectuée, le serveur proxy émet à destination du serveur d'accès (9) une demande de données d'authentification qui est retransmise au terminal de l'utilisateur, reçoit un message de réponse du terminal d'utilisateur par l'intermédiaire du serveur d'accès, et exécute une procédure d'authentification locale de l'utilisateur, sur la base des données d'authentification contenues dans le message de réponse.

2. Procédé selon la revendication 1,
**caractérisé en ce que** la demande de données d'authentification émise par le serveur proxy (10) à destination du terminal de l'utilisateur (11, 12, 13) si une authentification locale de l'utilisateur doit être effectuée, est un message de défi contenant un nombre aléatoire.

3. Procédé selon la revendication 2,
**caractérisé en ce que** le message de défi contient une indication permettant au terminal de l'utilisateur de déterminer qu'il concerne une authentification locale de l'utilisateur.

4. Procédé selon l'une des revendications 1 à 3,
**caractérisé en ce que** l'authentification distante de l'utilisateur par le serveur d'authentification distant (15) comprend des étapes au cours desquelles :
- le serveur d'authentification distant émet en direction de l'utilisateur un message de défi contenant un nombre aléatoire,
- le serveur proxy (10) retransmet le message de défi émis par le serveur d'authentification distant en direction de l'utilisateur et reçoit dans un message de réponse les données d'authentification de l'utilisateur auprès du serveur d'authentification distant,
- le serveur proxy (10) retransmet au serveur d'authentification distant le message de réponse émis par le terminal de l'utilisateur,
- le serveur proxy (10) reçoit du serveur d'authentification distant un message de résultat de l'authentification de l'utilisateur.

5. Procédé selon l'une des revendications 1 à 4,
**caractérisé en ce que** le serveur proxy (10) détermine quels droits d'accès attribuer à l'utilisateur en fonction du résultat des authentifications locale et distante de l'utilisateur.

6. Système de gestion d'autorisation d'un utilisateur lors d'une tentative d'accès d'un terminal d'utilisateur à un fournisseur d'accès ou de service IP (6, 7, 8) par l'intermédiaire d'un réseau de transport IP (5), le système comprenant :
- des réseaux locaux d'accès (1, 2) auxquels sont connectés les terminaux d'utilisateurs,
- des passerelles IP (3, 4) assurant la liaison respectivement entre les réseaux d'accès (1, 2) et le réseau de transport IP (5),
- au moins un serveur d'accès (9) par réseau local d'accès, conçu pour émettre, via une dite passerelle (3, 4), à la demande des terminaux d'utilisateur des requêtes d'accès RADIUS conformes au protocole RADIUS,
- au moins un serveur d'authentification distant (15) pour chacun des fournisseurs d'accès ou de service IP (6, 7, 8), conçu pour authentifier les utilisateurs en fonction de données d'authentification contenues dans des requêtes d'accès (50, 58) reçues par le serveur d'authentification, et
- un serveur proxy (10) connecté au réseau de transport IP conçu pour retransmettre chaque requête d'accès RADIUS, émise par l'un des serveurs d'accès (9) à la demande d'un utilisateur, vers un serveur d'authentification distant (15) de fournisseur d'accès ou de service IP indiqué dans la requête d'accès, et retransmettre vers les serveurs d'accès les réponses d'authentification fournies par les serveurs d'authentification distant (15), **caractérisé en ce que** le serveur proxy (10) comprend :
- des moyens pour déterminer pour chaque requête d'accès RADIUS reçue d'un serveur d'accès (9) à la demande d'un utilisateur, si une authentification locale de l'utilisateur émetteur de la requête d'accès doit ou non être effectuée au niveau du réseau local (1, 2),
- des moyens pour émettre par l'intermédiaire d'un serveur d'accès à destination d'un terminal d'utilisateur devant être authentifié localement, un message de demande de données d'authentification,
- des moyens pour, sur réception d'un message de réponse du terminal contenant les données d'authentification demandées, exécuter une procédure d'authentification locale de l'utilisateur, sur la base des données d'authentification contenues dans le message de réponse.

7. Système selon la revendication 6,
**caractérisé en ce que** le serveur proxy (10) comprend en outre des moyens pour déterminer un résultat global d'authentification en fonction du résultat de l'authentification locale de l'utilisateur et de la réponse d'authentification de l'utilisateur fournie par le serveur d'authentification (15), et pour retransmettre le résultat global d'authentification vers le serveur d'accès (9).

8. Système selon la revendication 6 ou 7,
**caractérisé en ce que** chaque serveur d'accès (9) comprend un client RADIUS et le serveur proxy comprend un client et un serveur RADIUS, pour échanger des messages conformes au protocole RADIUS.

9. Système selon l'une des revendications 6 à 8,
**caractérisé en ce que** le message de demande de données d'authentification émis par le serveur proxy (10) pour authentifier localement l'utilisateur est un message de défi, le serveur proxy comportant des moyens pour générer un nombre aléatoire qui est inséré dans le message de défi, et des moyens pour vérifier la réponse au message de défi reçue du terminal de l'utilisateur.

10. Système selon l'une des revendications 6 à 9,
**caractérisé en ce que** le serveur proxy (10) comprend des moyens pour déterminer quels droits d'accès attribuer à l'utilisateur en fonction du résultat des authentifications locale et distante de l'utilisateur.

11. Serveur proxy (10) pour autoriser un terminal d'utilisateur connecté à un réseau local d'accès (1, 2) à accéder à un fournisseur d'accès ou de service IP (6, 7, 8) par l'intermédiaire d'un réseau de transport IP (5) relié au réseau d'accès par une passerelle IP (3, 4), le serveur proxy étant connecté à un réseau de transport IP et comprenant des moyens pour :
- retransmettre chaque requête d'accès RADIUS (50, 58) conforme au protocole RADIUS, émise par un serveur d'accès (9) du réseau local d'accès (1, 2), à la demande d'un terminal d'utilisateur, via ladite passerelle (3, 4) vers un serveur d'authentification distant (15) de fournisseur d'accès ou de service IP indiqué dans la requête d'accès, et
- retransmettre vers le serveur d'accès la réponse d'authentification fournie par le serveur d'authentification distant (15),
**caractérisé en ce qu'**il comprend en outre des moyens pour :
- déterminer pour chaque requête d'accès RADIUS reçue dudit serveur d'accès (9) à la demande d'un utilisateur, si une authentification locale de l'utilisateur émetteur de la requête d'accès doit ou non être effectuée au niveau du réseau local d'accès (1, 2),
- émettre par l'intermédiaire d'un serveur d'accès à destination d'un terminal d'utilisateur devant être authentifié localement, un message de demande de données d'authentification, et pour recevoir en réponse du terminal d'utilisateur un message de réponse contenant les données d'authentification demandées, et
- exécuter une procédure d'authentification locale de l'utilisateur, sur la base des données d'authentification contenues dans le message de réponse.

12. Programme d'ordinateur destiné à être exécuté par un serveur proxy (10) conçu pour autoriser un terminal d'utilisateur connecté à un réseau d'accès (1, 2) à accéder à un fournisseur d'accès ou de service IP (6, 7, 8) par l'intermédiaire d'un réseau de transport IP (5) relié au réseau d'accès par une passerelle IP (3, 4), le serveur proxy étant connecté à un réseau de transport IP, le programme comprenant des instructions pour :
- retransmettre chaque requête d'accès RADIUS (50, 58) conforme au protocole RADIUS, émise par un serveur d'accès (9) du réseau local d'accès (1, 2), à la demande d'un terminal d'utilisateur, via ladite passerelle (3, 4) vers un serveur d'authentification distant (15) de fournisseur d'accès ou de service IP indiqué dans la requête d'accès, et
- retransmettre vers le serveur d'accès la réponse d'authentification fournie par le serveur d'authentification distant (15),
**caractérisé en ce qu'**il comprend en outre des instructions pour :
- déterminer pour chaque requête d'accès RADIUS reçue dudit serveur d'accès (9) à la demande d'un utilisateur, si une authentification locale de l'utilisateur émetteur de la requête d'accès doit ou non être effectuée au niveau du réseau local d'accès (1, 2),
- émettre par l'intermédiaire d'un serveur d'accès à destination d'un terminal d'utilisateur devant être authentifié localement, un message de demande de données d'authentification, et recevoir en réponse du terminal d'utilisateur un message de réponse contenant les données d'authentification demandées, et
- exécuter une procédure d'authentification locale de l'utilisateur, sur la base des données d'authentification contenues dans le message de réponse.

## Claims

1. Method of managing authorization of access of a user terminal during an attempted access to an IP transport network (5) by way of a local access network (1, 2), this method comprising steps in the course of which:
- a user terminal (11, 12, 13) sends destined for an IP service or access provider (6, 7, 8) an access request containing data for authenticating the user at the IP service or access provider, which is transmitted by way of an access server (9) of the local access network (1, 2), via a gateway (3, 4) ensuring the link between the said local access network (1, 2) and the IP transport network (5), with a view to being addressed to a remote authentication server (15) of the IP service or access provider,
- on receipt of the access request, the access server (9) sends a RADIUS request in accordance with the RADIUS protocol to a proxy server (10) of the local access network (1, 2),
- on receipt of the RADIUS request, the proxy server sends a request for authorization of access to the remote authentication server (15),
- the remote authentication server (15) executes a procedure for authenticating the user, on the basis of the authentication data contained in the access request, and transmits in response to the proxy server a response message containing the result of the procedure for authenticating the user,
**characterized in that** it furthermore comprises steps in the course of which:
- the proxy server determines for each RADIUS request, received from the access server (9) and corresponding to an access request sent by a user terminal, whether a local authentication of the sender user who issued the access request, at the level of the local access network (1, 2) has to be performed,
- if a local authentication of the user has to be performed, the proxy server sends destined for the access server (9) an authentication data request which is retransmitted to the terminal of the user, receives a response message from the user terminal by way of the access server, and executes a procedure for local authentication of the user, on the basis of the authentication data contained in the response message.

2. Method according to Claim 1,
**characterized in that** the authentication data request sent by the proxy server (10) destined for the terminal of the user (11, 12, 13) if a local authentication of the user has to be performed, is a challenge message containing a random number.

3. Method according to Claim 2,
**characterized in that** the challenge message contains an indication allowing the terminal of the user to determine that it relates to a local authentication of the user.

4. Method according to one of Claims 1 to 3, **characterized in that** the remote authentication of the user by the remote authentication server (15) comprises steps in the course of which:
- the remote authentication server sends the user a challenge message containing a random number,
- the proxy server (10) retransmits the challenge message sent by the remote authentication server to the user and receives in a response message the data for authenticating the user at the remote authentication server,
- the proxy server (10) retransmits to the remote authentication server the response message sent by the terminal of the user,
- the proxy server (10) receives from the remote authentication server a user authentication result message.

5. Method according to one of Claims 1 to 4, **characterized in that** the proxy server (10) determines which rights of access to allocate to the user as a function of the result of the local and remote authentications of the user.

6. System for managing authorization of a user during an attempted access of a user terminal to an IP service or access provider (6, 7, 8) by way of an IP transport network (5), the system comprising:
- local access networks (1, 2) to which the terminals of users are connected,
- IP gateways (3, 4) ensuring the link respectively between the access networks (1, 2) and the IP transport network (5),
- at least one access server (9) per local access network, designed to send, via a said gateway (3, 4), at the request of the user terminals RADIUS access requests in accordance with the RADIUS protocol,
- at least one remote authentication server (15) for each of the IP service or access providers (6, 7, 8), designed to authenticate the users as a function of authentication data contained in access requests (50, 58) received by the authentication server, and
- a proxy server (10) connected to the IP transport network designed to retransmit each RADIUS access request, sent by one of the access servers (9) at the request of a user, to an IP service or access provider remote authentication server (15) indicated in the access request, and retransmit to the access servers the authentication responses provided by the remote authentication servers (15),
**characterized in that** the proxy server (10) comprises:
- means for determining for each RADIUS access request received from an access server (9) at the request of a user, whether or not a local authentication of the user who sent the access request has to be performed at the level of the local network (1, 2),
- means for sending by way of an access server destined for a user terminal having to be authenticated locally, a message requesting authentication data,
- means for, on receipt of a response message from the terminal containing the requested authentication data, executing a procedure for local authentication of the user, on the basis of the authentication data contained in the response message.

7. System according to Claim 6,
**characterized in that** the proxy server (10) furthermore comprises means for determining a global authentication result as a function of the result of the local authentication of the user and of the user's authentication response provided by the authentication server (15), and for retransmitting the global authentication result to the access server (9).

8. System according to Claim 6 or 7,
**characterized in that** each access server (9) comprises a RADIUS client and the proxy server comprises a client and a RADIUS server, for exchanging messages in accordance with the RADIUS protocol.

9. System according to one of Claims 6 to 8,
**characterized in that** the authentication data request message sent by the proxy server (10) in order to locally authenticate the user is a challenge message, the proxy server comprising means for generating a random number which is inserted into the challenge message, and means for verifying the response, received from the terminal of the user, to the challenge message.

10. System according to one of Claims 6 to 9, **characterized in that** the proxy server (10) comprises means for determining which rights of access to allocate to the user as a function of the result of the local and remote authentications of the user.

11. Proxy server (10) for authorizing a user terminal connected to a local access network (1, 2) to access an IP service or access provider (6, 7, 8) by way of an IP transport network (5) linked to the access network by an IP gateway (3, 4), the proxy server being connected to an IP transport network and comprising means for:
- retransmitting each RADIUS access request (50, 58) in accordance with the RADIUS protocol, sent by an access server (9) of the local access network (1, 2), at the request of a user terminal, via the said gateway (3, 4) to an IP service or access provider remote authentication server (15) indicated in the access request, and
- retransmitting to the access server the authentication response provided by the remote authentication server (15),
**characterized in that** it furthermore comprises means for:
- determining for each RADIUS access request received from the said access server (9) at the request of a user, whether or not a local authentication of the sender user who issued the access request has to be performed at the level of the local access network (1, 2),
- sending by way of an access server destined for a user terminal having to be authenticated locally, a message requesting authentication data, and for receiving in response from the user terminal a response message containing the requested authentication data, and
- executing a procedure for local authentication of the user, on the basis of the authentication data contained in the response message.

12. Computer program intended to be executed by a proxy server (10) designed to authorize a user terminal connected to an access network (1, 2) to access an IP service or access provider (6, 7, 8) by way of an IP transport network (5) linked to the access network by an IP gateway (3, 4), the proxy server being connected to an IP transport network, the program comprising instructions for:
- retransmitting each RADIUS access request (50, 58) in accordance with the RADIUS protocol, sent by an access server (9) of the local access network (1, 2), at the request of a user terminal, via the said gateway (3, 4) to an IP service or access provider remote authentication server (15) indicated in the access request, and
- retransmitting to the access server the authentication response provided by the remote authentication server (15),
**characterized in that** it furthermore comprises instructions for:
- determining for each RADIUS access request received from the said access server (9) at the request of a user, whether or not a local authentication of the user who sent the access request has to be performed at the level of the local access network (1, 2),
- sending by way of an access server destined for a user terminal having to be authenticated locally, a message requesting authentication data, and receiving in response from the user terminal a response message containing the requested authentication data, and
- executing a procedure for local authentication of the user, on the basis of the authentication data contained in the response message.

## Patentansprüche

1. Verfahren zur Verwaltung der Zugriffsgenehmigung eines Benutzerendgeräts bei einem Zugriffsversuch auf ein IP-Transportnetz (5) mittels eines lokalen Zugriffsnetzes (1, 2), wobei dieses Verfahren Schritte enthält, während denen:
- ein Benutzerendgerät (11, 12, 13) an einen Zugriffs- oder IP-Dienste-Anbieter (6, 7, 8) einen Authentifizierungsdaten des Benutzers beim Zugriffs- oder IP-Dienste-Anbieter enthaltenden Zugriffsantrag sendet, der mittels eines Zugriffsservers (9) des lokalen Zugriffsnetzes (1, 2) über ein Gateway (3, 4) übertragen wird, das die Verbindung zwischen dem lokalen Zugriffsnetz (1, 2) und dem IP-Transportnetz (5) gewährleistet, um an einen fernen Authentifizierungsserver (15) des Zugriffs- oder IP-Dienste-Anbieters geschickt zu werden,
- der Zugriffsserver (9) bei Empfang des Zugriffsantrags einen RADIUS-Antrag gemäß dem RADIUS-Protokoll an einen Proxyserver (10) des lokalen Zugriffsnetzes (1, 2) sendet,
- der Proxyserver bei Empfang des RADIUS-Antrags eine Zugriffsgenehmigungsanforderung an den fernen Authentifizierungsserver (15) sendet,
- der ferne Authentifizierungsserver (15) eine Authentifizierungsprozedur des Benutzers auf der Basis der im Zugriffsantrag enthaltenen Authentifizierungsdaten ausführt und als Antwort an den Proxyserver eine Antwortmitteilung überträgt, die das Ergebnis der Authentifizierungsprozedur des Benutzers enthält,
**dadurch gekennzeichnet, dass** es außerdem Schritte enthält, während denen:
- der Proxyserver für jeden RADIUS-Antrag, der vom Zugriffsserver (9) empfangen wird und einem von einem Benutzerendgerät gesendeten Zugriffsantrag entspricht, bestimmt, ob eine lokale Authentifizierung des den Zugriffsantrag sendenden Benutzers im Bereich des lokalen Zugriffsnetzes (1, 2) durchgeführt werden muss,
- wenn eine lokale Authentifizierung des Benutzers durchgeführt werden muss, der Proxyserver an den Zugriffsserver (9) eine Authentifizierungsdatenanforderung sendet, die an das Benutzerendgerät weitergeleitet wird, eine Antwortmitteilung vom Benutzerendgerät über den Zugriffsserver empfängt, und eine lokale Authentifizierungsprozedur des Benutzers auf der Basis der in der Antwortmitteilung enthaltenen Authentifizierungsdaten ausführt.

2. Verfahren nach Anspruch 1, **dadurch gekennzeichnet, dass** die Authentifizierungsdatenanforderung, die vom Proxyserver (10) an das Benutzerendgerät (11, 12, 13) gesendet wird, wenn eine lokale Authentifizierung des Benutzers ausgeführt werden muss, eine Herausforderungsmitteilung ist, die eine Zufallszahl enthält.

3. Verfahren nach Anspruch 2, **dadurch gekennzeichnet, dass** die Herausforderungsmitteilung eine Angabe enthält, die es dem Benutzerendgerät ermöglicht, festzustellen, dass sie eine lokale Authentifizierung des Benutzers betrifft.

4. Verfahren nach einem der Ansprüche 1 bis 3, **dadurch gekennzeichnet, dass** die ferne Authentifizierung des Benutzers durch den fernen Authentifizierungsserver (15) Schritte enthält, während denen :
- der ferne Authentifizierungsserver an den Benutzer eine Herausforderungsmitteilung sendet, die eine Zufallszahl enthält,
- der Proxyserver (10) die vom fernen Authentifizierungsserver gesendete Herausforderungsmitteilung an den Benutzer weiterleitet und in einer Antwortmitteilung die Authentifizierungsdaten des Benutzers beim fernen Authentifizierungsserver empfängt,
- der Proxyserver (10) an den fernen Authentifizierungsserver die vom Benutzerendgerät gesendete Antwortmitteilung weiterleitet,
- der Proxyserver (10) vom fernen Authentifizierungsserver eine Ergebnismitteilung der Authentifizierung des Benutzers empfängt.

5. Verfahren nach einem der Ansprüche 1 bis 4, **dadurch gekennzeichnet, dass** der Proxyserver (10) bestimmt, welche Zugriffsrechte dem Benutzer abhängig vom Ergebnis der lokalen und fernen Authentifizierungen des Benutzers zuzuteilen sind.

6. System zur Genehmigungsverwaltung eines Benutzers bei einem Zugriffsversuch eines Benutzerendgeräts auf einen Zugriffs- oder IP-Dienste-Anbieter (6, 7, 8) über ein IP-Transportnetz (5), wobei das System enthält:
- lokale Zugriffsnetze (1, 2), mit denen die Benutzerendgeräte verbunden sind,
- IP-Gateways (3, 4), die die Verbindung zwischen den Zugriffsnetzen (1, 2) und dem IP-Transportnetz (5) gewährleisten,
- mindestens einen Zugriffsserver (9) pro lokalem Zugriffsnetz, der angeordnet ist, um über ein Gateway (3, 4) auf Anforderung der Benutzerendgeräte RADIUS-Zugriffsanträge gemäß dem RADIUS-Protokoll zu senden,
- mindestens einen fernen Authentifizierungsserver (15) für jeden der Zugriffs- oder IP-Dienste-Anbieter (6, 7, 8), der angeordnet ist, um die Benutzer abhängig von in vom Authentifizierungsserver empfangenen Zugriffsanträgen (50, 58) enthaltenen Authentifizierungsdaten zu authentifizieren, und
- einen mit dem IP-Transportnetz verbundenen Proxyserver (10), der angeordnet ist, um jeden RADIUS-Zugriffsantrag, der von einem der Zugriffsserver (9) auf Anforderung eines Benutzers gesendet wurde, an einen fernen Authentifizierungsserver (15) eines im Zugriffsantrag angegebenen Zugriffs- oder IP-Dienste-Anbieters weiterzuleiten, und an die Zugriffsserver die von den fernen Authentifizierungsservern (15) gelieferten Authentifizierungsantworten weiterzuleiten,
**dadurch gekennzeichnet, dass** der Proxyserver (10) enthält:
- Einrichtungen, um für jeden von einem Zugriffsserver (9) auf Anforderung eines Benutzers empfangenen RADIUS-Zugriffsantrag zu bestimmen, ob eine lokale Authentifizierung des den Zugriffsantrag sendenden Benutzers im Bereich des lokalen Netzes (1, 2) ausgeführt werden muss oder nicht,
- Einrichtungen, um über einen Zugriffsserver an ein lokal zu authentifizierendes Benutzerendgerät eine Anforderungsmitteilung von Authentifizierungsdaten zu senden,
- Einrichtungen, um bei Empfang einer Antwortmitteilung vom Endgerät, die die geforderten Authentifizierungsdaten enthält, eine lokale Authentifizierungsprozedur des Benutzers auf der Basis der in der Antwortmitteilung enthaltenen Authentifizierungsdaten auszuführen.

7. System nach Anspruch 6, **dadurch gekennzeichnet, dass** der Proxyserver (10) außerdem Einrichtungen enthält, um ein globales Authentifizierungsergebnis abhängig vom Ergebnis der lokalen Authentifizierung des Benutzers und der vom Authentifizierungsserver (15) gelieferten Authentifizierungsantwort des Benutzers zu bestimmen, und um das globale Authentifizierungsergebnis an den Zugriffsserver (9) weiterzuleiten.

8. System nach Anspruch 6 oder 7, **dadurch gekennzeichnet, dass** jeder Zugriffsserver (9) einen RADIUS-Client enthält, und der Proxyserver einen RADIUS-Client und -Server enthält, um Mitteilungen gemäß dem RADIUS-Protokoll auszutauschen.

9. System nach einem der Ansprüche 6 bis 8, **dadurch gekennzeichnet, dass** die Authentifizierungsdaten-Anforderungsmitteilung, die vom Proxyserver (10) gesendet wird, um lokal den Benutzer zu authentifizieren, eine Herausforderungsmitteilung ist, wobei der Proxyserver Einrichtungen, um eine Zufallszahl zu erzeugen, die in die Herausforderungsmitteilung eingefügt wird, und Einrichtungen aufweist, um die vom Benutzerendgerät empfangene Antwort auf die Herausforderungsmitteilung zu überprüfen.

10. System nach einem der Ansprüche 6 bis 9, **dadurch gekennzeichnet, dass** der Proxyserver (10) Einrichtungen enthält, um zu bestimmen, welche Zugriffsrechte dem Benutzer abhängig vom Ergebnis der lokalen und fernen Authentifizierungen des Benutzers zuzuteilen sind.

11. Proxyserver (10), um einem mit einem lokalen Zugriffsnetz (1, 2) verbundenen Benutzerendgerät den Zugriff auf einen Zugriffs- oder IP-Dienste-Anbieter (6, 7, 8) über ein IP-Transportnetz (5) zu genehmigen, das mit dem Zugriffsnetz über ein IP-Gateway (3, 4) verbunden ist, wobei der Proxyserver mit einem IP-Transportnetz verbunden ist und Einrichtungen enthält, um:
- jeden RADIUS-Zugriffsantrag (50, 58) gemäß dem RADIUS-Protokoll, der von einem Zugriffsserver (9) des lokalen Zugriffsnetzes (1, 2) auf Anforderung eines Benutzerendgeräts gesendet wird, über das Gateway (3, 4) an einen fernen Authentifizierungsserver (15) eines im Zugriffsantrag angegebenen Zugriffs- oder IP-Dienste-Anbieters weiterzuleiten, und
- an den Zugriffsserver die vom fernen Authentifizierungsserver (15) gelieferte Authentifizierungsantwort weiterzuleiten,
**dadurch gekennzeichnet, dass** er außerdem Einrichtungen enthält, um:
- für jeden vom Zugriffsserver (9) auf Anforderung eines Benutzers empfangenen RADIUS-Zugriffsantrag zu bestimmen, ob eine lokale Authentifizierung des Benutzers, der den Zugriffsantrag gesendet hat, im Bereich des lokalen Zugriffsnetzes (1, 2) durchgeführt werden muss oder nicht,
- über einen Zugriffsserver an ein Benutzerendgerät, das lokal authentifiziert werden muss, eine Authentifizierungsdaten-Anforderungsmitteilung zu senden, und um als Antwort vom Benutzerendgerät eine Antwortmitteilung zu empfangen, die die geforderten Authentifizierungsdaten enthält, und
- eine lokale Authentifizierungsprozedur des Benutzers auf der Basis der in der Antwortmitteilung enthaltenen Authentifizierungsdaten auszuführen.

12. Computerprogramm, das dazu bestimmt ist, von einem Proxyserver (10) ausgeführt zu werden, der angeordnet ist, um einem mit einem Zugriffsnetz (1, 2) verbundenen Benutzerendgerät zu genehmigen, auf einen Zugriffs- oder IP-Dienste-Anbieter (6, 7, 8) über ein IP-Transportnetz (5) zuzugreifen, das mit dem Zugriffsnetz über ein IP-Gateway (3, 4) verbunden ist, wobei der Proxyserver mit einem IP-Transportnetz verbunden ist, wobei das Programm Anweisungen enthält, um:
- jeden RADIUS-Zugriffsantrag (50, 58) gemäß dem RADIUS-Protokoll, der von einem Zugriffsserver (9) des lokalen Zugriffsnetzes (1, 2) gesendet wird, auf Anforderung eines Benutzerendgeräts über das Gateway (3, 4) an einen fernen Authentifizierungsserver (15) eines Zugriffs- oder IP-Dienste-Anbieters weiterzuleiten, der im Zugriffsantrag angegeben ist, und
- an den Zugriffsserver die vom fernen Authentifizierungsserver (15) gelieferte Authentifizierungsantwort weiterzuleiten,
**dadurch gekennzeichnet, dass** es außerdem Anweisungen enthält, um:
- für jeden auf Anforderung eines Benutzers vom Zugriffsserver (9) empfangenen RADIUS-Zugriffsantrag zu bestimmen, ob eine lokale Authentifizierung des Benutzers, der den Zugriffsantrag gesendet hat, im Bereich des lokalen Zugriffsnetzes (1, 2) ausgeführt werden muss oder nicht,
- über einen Zugriffsserver an ein lokal zu authentifizierendes Benutzerendgerät eine Authentifizierungsdaten-Anforderungsmitteilung zu senden, und als Antwort vom Benutzerendgerät eine Antwortmitteilung zu empfangen, die die angeforderten Authentifizierungsdaten enthält, und
- eine lokale Authentifizierungsprozedur des Benutzers auf der Basis der in der Antwortmitteilung enthaltenen Authentifizierungsdaten auszuführen.
